# EUROPEAN PATENT SPECIFICATION

(11) **EP 3 101 261 B1**
(45) Date of publication and mention of the grant of the patent: **27.04.2022**
(21) Application number: 16171253.4
(22) Date of filing: 25.05.2016
(51) Int. Cl.: F02K 9/54, F02K 9/52

(54) **LIQUID PROPELLANT ENGINE**
FLÜSSIGTREIBSTOFFMOTOR
MOTEUR À PROPULSEUR LIQUIDE

(30) Priority: 26.05.2015 IT UB20151139
(43) Date of publication of application: 07.12.2016
(73) Proprietor: AVIO S.p.A., 00187 Roma (IT)
(72) Inventor: BELLOMI, Paolo, 00128 Roma (IT); RUDNYKH, Mikhail, 00049 Velletri (IT)
(74) Representative: Mannucci, Michele

(56) References cited:
- WO-A1-2014/144369
- US-A1- 2008 256 925
- US-B1- 8 250 853

## Description

The present invention relates to a liquid propellant engine and, in particular, to a liquid propellant engine for aerospace use.

A liquid propellant engine for aerospace use must satisfy a robustness requirement for its possible reuse.

As is known, a liquid propellant engine is subject to high thermo-mechanical loads which increase with increasing engine performance. High performance can be obtained by increasing the power parameters of the engine, such as the pressure in the combustion chamber.

Practically, it is observed however that with the increase in these parameters a progressive decrease of the functional reliability of the engine occurs.

The document RU23528043 C1 describes a liquid propellant engine comprising a combustor having a combustion chamber and an expansion nozzle located downstream of the combustion chamber cooled by a flow of liquid propellant. The engine also comprises a fuel pump and an oxidant pump connected angularly to each other by means of a common torsion shaft to rotate at the same angular speed. The two pumps are thus both driven by a turbine which drives the common shaft and, in turn, driven by a pre-burner receiving in input a flow of fuel and oxidant and forming an output oxidising mixture which, having passed through the turbine, is supplied to the combustion chamber.

The turbine previously described is associated to a supplementary turbine, which is also angularly coupled to the common shaft to rotate in unison with the two pumps and the other turbine. The supplementary turbine has an inlet connecting with the outlet of a cooling circuit of the combustor and, in this specific case, also heating the combustible liquid, and an outlet connected to the combustion chamber.

Liquid propellant engines of the type described above have some problematic aspects.

First, since the two pumps are connected to each other by a rotating shaft, a possible leakage of fuel and oxidant drawn through by the pumps would inevitably mix causing damage to the engine with catastrophic consequences.

In order to avoid such mixing, dynamic seal devices associated with the common shaft are normally present in known engines. Such seal systems are relatively complex and expensive and in any case not completely reliable.

In addition, since the rotation speeds of the oxidant pump and the combustible liquid pump are equal, it is particularly difficult to determine a speed value which corresponds to a high degree of overall engine efficiency. In all cases, the value determined will, however, always be a compromise value, for which at least one of the pumps or turbines will operate in a condition other than that of maximum efficiency, with an immediate impact on the overall engine efficiency.

In addition, known liquid propellant engines of the type described above have a theoretical limit to the increase in engine thrust. As is known, in fact, the thrust increases linearly with the increase in the fuel flow rate. Increasing the flow rate and needing to comply with a set value of the combustion chamber pressure, it is necessary to increase the throat section of the combustion chamber and consequently the size of the expansion nozzle. The aforesaid increases in cross-sections mean an increase in the radial dimensions of the engine. Although the increase in the radial dimensions involves an increase in the surface area of the combustion chamber side wall and, in essence, in an increase in the useful heat exchange surface area, this increase in surface area is still not sufficient to achieve thermal balance in conditions of high fuel flow rates. Indeed, while the thrust increases directly in proportion to the flow rate, the increase in the surface area of the side wall depends, however, on the square root of the flow rate. It follows that in order to maintain an adequate extraction of heat for the fuel flow rate and hence the level of thrust, the increase in the surface area of the side wall is not sufficient to remove the heat generated. For this reason, it is necessary to increase the length of the combustion chamber, which inevitably leads to an increase in the axial size of the engine and, proportionally, of its weight.

US 8,250,853 B1 shows an engine in which the combustion chamber is supplied with liquid oxygen directly from the outlet of the oxidant pump. At the same time, this document shows a gas generator having an output gas which, after passing through the corresponding turbine, is discharged into the atmosphere or into a nozzle separate from the combustion chamber. The performance of this engine is penalised by the fact that part of the propellants is not introduced into the combustion chamber and is discharged without producing engine thrust.

US2008256925A1 corresponds to the preamble of claim 1.

The objective of the present invention is to provide a liquid propellant engine which makes it possible to resolve the above problems simply and economically.

The above objective is achieved by a liquid propellant engine as claimed in claim 1.

For a better understanding of the present invention a preferred embodiment is now described, as a non-limiting example, with reference to the accompanying drawings, wherein:
Figure 1 shows, schematically and substantially in block form, a preferred embodiment of the liquid propellant engine according to the invention; and
Figure 2 is a figure similar to figure 1 and illustrates an alternative embodiment of the liquid propellant engine of figure 1.

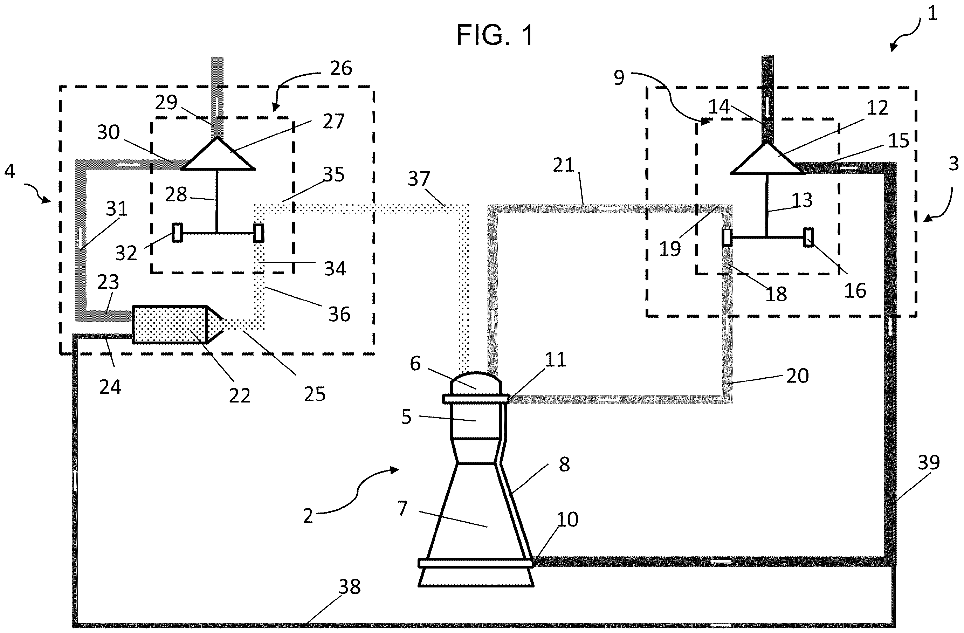

Number 1 in figure 1 indicates, as a whole, a liquid propellant engine with a double supply turbopump. In particular, the engine 1 comprises a combustor 2, known *per se,* an assembly 3 for feeding a combustible liquid and an assembly 4 for feeding and supplying the combustion chamber 2 with an oxidising mixture with a high oxidant content.

The combustor 2 comprises a combustion chamber 5, an injection plate 6, a diffuser nozzle 7 and a regenerative cooling circuit 8 for the combustion chamber 5 and for the diffuser nozzle 7, all known *per se* and not described in detail.

The cooling circuit 8 surrounds the combustion chamber 5 and the nozzle 7 and conveys a cooling fluid, in this case a combustible liquid, which enters from an inlet 10 of the cooling circuit 8 and exits via an outlet 11 of the circuit 8 at a higher temperature, having extracted heat from the side walls of the combustor 2.

The assembly 3 comprises a turbopump 9, in turn comprising a pump 12 having a respective drive shaft 13, an inlet 14 connected to a tank which is known and not illustrated and an outlet mouth 15 connected to the inlet 10 of the circuit by means of a duct 39.

The assembly 3 further comprises a driving turbine 16 for the pump 12. The turbine 16 is angularly connected to shaft 13 in a manner known *per se* and has an inlet mouth 18 connected to the outlet 11 by means of a pipe 20 and an outlet mouth 19 connected to the injection plate 6 by means of a pipe 21. The combustible liquid is thus taken from the mouth 11 following a closed path, passes through the turbine 16 and enters the combustion chamber 5 through the injection plate 6.

Still with reference to figure 1, the assembly 4 comprises a burner 22, known *per se* and not described in detail comprising two inlets 23 and 24 and an outlet 25. The assembly 4 further comprises a turbopump 26, in turn comprising a pump 27 having a drive shaft 28, an oxidising fluid inlet mouth 29 and an outlet mouth 30 connected to the inlet 23 of the burner 22 through a duct 31.

The assembly 4 also comprises a driving turbine 32 for the pump 27. The turbine 32 is angularly integral with the shaft 28 in a manner known *per se,* and has an inlet mouth 34 connected to the outlet 25 of the burner 22 by means of a pipe 36 and an outlet mouth 35 connected to the injection plate 6 by means of a pipe 37.

Still with reference to figure 1, the inlet 24 of the burner 22 is connected to the outlet port 15 of the pump 12 by means of a pipe 38.

In steady state conditions, the pump 12 sends the combustible liquid to the inlets 10 and 24 while the pump 27 sends the oxidising fluid to the inlet 23 of the burner 22.

The burner 22 burns the oxidising fluid and the combustible liquid and generates an oxidising mixture which passes through the turbine 32 before flowing through to the combustor 2. Simultaneously, the combustible liquid supplied by the pump 12 into the inlet 10 of the same combustor 2 passes through the circuit 8, heats up and gasifies and exits from the circuit 8 through the outlet 11 and passes through the turbine 16 before entering the combustion chamber 2 through the injection plate 6 and burns with the oxidising mixture inside the chamber 5.

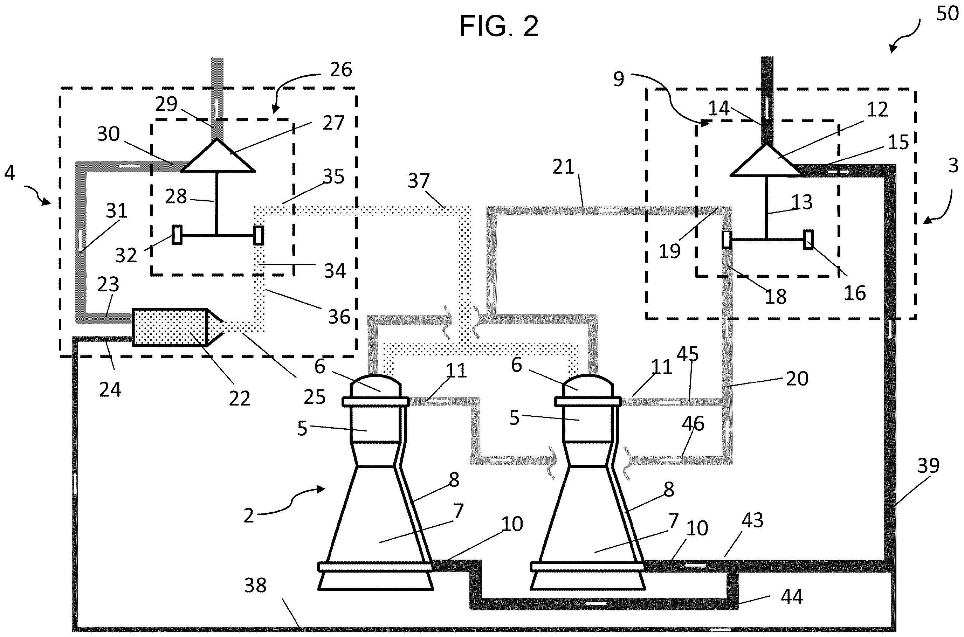

The embodiment illustrated in figure 2 relates to an engine 50, which differs from the engine 1 in some constructional details and for which the constituent parts are indicated where possible using the same reference numbers as for the corresponding parts of the engine 1.

The engine 50 comprises two combustors 2 constructively and dimensionally identical or different to each other. The combustors 2 are connected to the assemblies 3 and 4 in parallel. In the example described, the injection plates 6 are fluidly connected to the pipes 37 and 21 for supplying the two injection plates 6.

Still with reference to figure 2, the combustible liquid fed by the pump 12 is divided between the inlets 10 of the combustors, one inlet of which is connected to the pipe 39 and the outlets of which are connected to the inlets 10 via two pipe portions indicated by 43 and 44. Similarly, the outlets 11 of the same combustion chambers 2 are connected to the pipe 20 via the pipes 45 and 46.

From the foregoing it is clear, firstly, how the use of a pair of distinct and independent turbopumps, i.e. devoid of mechanical rotational constraints makes it possible to increase considerably the safety and increase the overall efficiency of the engine.

As regards safety, the engines 1 and 50 described make it always possible, even in the presence of leakage, to keep the combustible liquid and the oxidising mixture separate using traditional static sealing systems rather than the complex and expensive dynamic sealing systems necessary in the known solutions.

As regards engine efficiency it is clear on the other hand that the absence of mechanical constraints between the pumps and therefore between the two turbopumps, makes it possible to control the fuel flow the flow of oxidising mixture in a precise manner. There are actually no obstacles to controlling the turbopumps independently from each another. The foregoing arises from the fact that the pumps 12 and 27 are mutually mechanically separated and therefore their rotation speeds can be set without restriction through adjustment of the respective, also mutually independent, turbines 16 and 32 and therefore controllable without mechanical constraints. In other words, unlike known engines, the engines 1 and 50 described comprise two turbine pumps 9, 26 which in practice are two distinct units, fluidly separate and independent from one another.

This makes it possible to control the pumps 12 and 27 in such a way that these, and ultimately the two turbopumps, work in conditions of maximum efficiency.

In addition, the oxidising mixture produced by the burner 22 is not only used to feed the turbine 32, but also subsequently for feeding the combustion chamber 5. In other words, the whole flow of oxidising mixture downstream of the turbine 32 is used for combustion in the combustion chamber 5, together with the fuel coming from the pipe 21.

Finally, the use of two combustion chambers 2 arranged in parallel makes it possible to increase the engine thrust by increasing the fuel flow rate while, at the same time, limiting the dimensions and therefore the bulkiness of the engine.

## Claims

1. A liquid propellant engine (1; 50) comprising: at least one combustor (2) comprising, in turn, a combustion chamber (5), an injection plate (6); a combustible liquid feeding assembly (3); and an oxidising mixture feeding assembly (4) ; said feeding assemblies (3,4) each comprising a respective pump (12, 27) and a respective turbine (16,32) for driving said corresponding pump (12, 27); the engine (1;50) further comprising a combustible liquid heating circuit; the heating circuit (8) comprising an outlet port (11) for the heated combustible liquid, fluidly connected to an inlet mouth (18) of the turbine (16) of the combustible liquid feeding assembly (3) by means of a first pipe (20); the turbine (16) of the combustible liquid feeding assembly (3) having an outlet (19) connected to the said injection plate (6) by means of a second pipe (21); the oxidising mixture feeding assembly (4) comprising an oxidising mixture forming burner (22), an outlet mouth (25) of the burner (22) being fluidly connected to an inlet mouth (34) of the turbine (32) of the oxidising mixture feeding assembly (4); said combustible liquid and oxidising mixture feeding assemblies being mechanically separate and independently controllable from each other; the turbine (32) of the oxidising mixture feeding assembly having an outlet mouth (35) connected to the said injection plate (6) by means of a third pipe (37); **characterized in that** said feeding assemblies comprise a single burner defined by said oxidising mixture forming burner (22), and **in that** the inlet mouth (18) of the turbine (16) of the combustible liquid feeding assembly (3) is fluidly connected only to said outlet port (11).

2. The liquid propellant engine according to claim 1, **characterised in that** the oxidising mixture feeding assembly pump (27) has an outlet mouth (30) connected solely to an inlet (23) of the said burner (22).

3. The liquid propellant engine according to claims 1 or 2, **characterised by** comprising two of the said combustors (2) mutually distinct and independent from each other, the combustion chambers (5) of said combustors (2) being fluidly connected in parallel to respective outlet mouths (19), (35) of said turbines (16), (32) .

4. The liquid propellant engine according to claim 3, **characterised by** comprising, for each said combustion chamber (5), a respective circuit (8) for heating said combustible liquid, each heating circuit (8) having a respective outlet mouth (11) separate and independent from the outlet mouth (11) of the other heating circuit (8), said outlet mouths (11) being fluidly connected in parallel to an inlet mouth (18) of the turbine (16) of said combustible liquid feeding assembly (3).

5. The liquid propellant engine according to claim 4, **characterised in that** said heating circuits (8) comprise a respective inlet mouth (10) for the combustible liquid to be heated, said inlet mouths (10) being fluidly connected in parallel to an outlet (15) of the pump (12) of the combustible liquid feeding assembly (3).

## Patentansprüche

1. Flüssigtreibstoff-Triebwerk (1; 50) mit: mindestens einer Verbrennungsvorrichtung (2), die ihrerseits eine Verbrennungskammer (5), eine Einspritzplatte (6), eine Brennflüssigkeit-Förderanordnung (3) und eine Oxidationsmischung-Förderanordnung (4) aufweist, wobei die Förderanordnungen (3, 4) jeweils eine jeweilige Pumpe (12, 27) und eine jeweilige Turbine (16, 32) zum Betreiben der jeweiligen Pumpe (12, 27) aufweisen, wobei das Triebwerk (1; 50) ferner einen Brennflüssigkeit-Heizkreis aufweist, wobei der Heizkreis (8) einen Auslass (11) für die geheizte Brennflüssigkeit aufweist, der fluidmäßig mit einem Einlass (18) der Turbine (16) für die Brennflüssigkeit-Förderanordnung (3) mittels einer ersten Leitung (20) verbunden ist, wobei die Turbine (16) der Brennflüssigkeit-Förderanordnung (3) einen Auslass (19) aufweist, der mit der Einspritzplatte (6) mittels einer zweiten Leitung (21) verbunden ist, wobei die Oxidationsmischung-Förderanordnung (4) einen Oxidationsmischung-Formungs-Brenner (22) aufweist, wobei ein Auslass (25) des Brenners (22) fluidmäßig mit einem Einlass (34) der Turbine (32) der Oxidationsmischung-Förderanordnung (4) verbunden ist, wobei die Brennflüssigkeit- und die Oxidationsmischung-Förderanordnung mechanisch separat und unabhängig voneinander steuerbar sind, wobei die Turbine der Oxidationsmischung-Förderanordnung einen Auslass (35) aufweist, der mit der Einspritzplatte (6) mittels einer dritten Leitung (37) verbunden ist, **dadurch gekennzeichnet, dass** die Förderanordnungen einen einzelnen Brenner aufweisen, der durch den Oxidationsmischung-Formungs-Brenner (22 definiert ist und dass der Einlass (18) der Turbine (16) der Brennflüssigkeit-Förderanordnung (3) fluidmäßig nur mit dem Auslass (11) verbunden ist.

2. Flüssigtreibstoff-Triebwerk nach Anspruch 1, **dadurch gekennzeichnet, dass** die Oxidationsmischung-Förderanordnung-Pumpe (27) einen Auslass (30) aufweist, der lediglich mit einem Einlass (23) des Brenners (22) verbunden ist.

3. Flüssigtreibstoff-Triebwerk nach Anspruch 1 oder 2 **gekennzeichnet durch** zwei der Verbrennungsvorrichtungen (2), die gegenseitig unterschiedlich und unabhängig voneinander sind, wobei die Verbrennungskammer (5) der Verbrennungsvorrichtungen (2) fluidmäßig parallel mit jeweiligen Anlässen (19), (35) der Turbinen (16), (32) verbunden sind.

4. Flüssigtreibstoff-Triebwerk nach Anspruch 3, **gekennzeichnet durch** einen jeweiligen Kreis (8) zum Heizen der Brennflüssigkeit für jede Verbrennungskammer (5), wobei jeder Heizkreis (8) einen jeweiligen Auslass (11) separat und unabhängig von dem Auslass (11) des anderen Heizkreises (8) aufweist, wobei die Auslässe (11) fluidmäßig parallel zu einem Einlass (18) der Turbine (16) der Brennflüssigkeit-Förderanordnung (3) angeordnet sind.

5. Flüssigtreibstoff-Triebwerk nach Anspruch 4, **dadurch gekennzeichnet, dass** die Heizkreise (8) einen jeweiligen Einlass (10) für die zu heizende Brennflüssigkeit aufweisen, wobei die Einlässe (10) fluidmäßig parallel zu einem Auslass (15) der Pumpe (12) der Brennflüssigkeit-Förderanordnung (3) verbunden sind.

## Revendications

1. Moteur à propulseur liquide (1; 50) comprenant : au moins un dispositif de combustion (2) comprenant, à son tour, une chambre de combustion (5), une plaque d'injection (6) ; un ensemble d'alimentation en liquide combustible (3) ; et un ensemble d'alimentation en mélange oxydant (4) ; lesdits ensembles d'alimentation (3,4) comprenant chacun une pompe respective (12, 27) et une turbine respective (16,32) pour entraîner ladite pompe correspondante (12, 27) ; le moteur (1; 50) comprenant en outre un circuit de chauffage de liquide combustible ; le circuit de chauffage (8) comprenant un port de sortie (11) pour le liquide combustible chauffé, connecté de manière fluidique à un orifice d'entrée (18) de la turbine (16) de l'ensemble d'alimentation en liquide combustible (3) au moyen d'un premier tuyau (20) ; la turbine (16) de l'ensemble d'alimentation en liquide combustible (3) ayant une sortie (19) connectée à ladite plaque d'injection (6) au moyen d'un deuxième tuyau (21) ; l'ensemble d'alimentation en mélange oxydant (4) comprenant un brûleur de formation de mélange oxydant (22), un orifice de sortie (25) du brûleur (22) étant connecté de manière fluidique à un orifice d'entrée (34) de la turbine (32) de l'ensemble d'alimentation en mélange oxydant (4) ; lesdits ensembles d'alimentation en liquide combustible et en mélange oxydant étant séparés mécaniquement et commandables indépendamment l'un de l'autre ; la turbine (32) de l'ensemble d'alimentation en mélange oxydant ayant un orifice de sortie (35) connecté à ladite plaque d'injection (6) au moyen d'un troisième tuyau (37) ; **caractérisé en ce que** lesdits ensembles d'alimentation comprennent un unique brûleur formé par ledit brûleur de formation de mélange oxydant (22) et **en ce que** l'ouverture d'entrée (18) de la turbine (16) de l'ensemble d'alimentation en liquide combustible (3) est connecté de manière fluidique seulement audit port de sortie (11).

2. Le moteur à propulseur liquide selon la revendication (1), **caractérisé en ce que** la pompe (27) de l'ensemble d'alimentation en mélange oxydant a un orifice de sortie (30) connecté uniquement à une entrée (23) dudit brûleur (22).

3. Le moteur à propulseur liquide selon les revendications 1 ou 2, **caractérisé en ce qu'**il comprend deux desdits dispositifs de combustion (2) distincts l'un de l'autre et indépendants l'un de l'autre, les chambres de combustion (5) desdits dispositifs de combustion (2) étant connectées de manière fluidique en parallèle à des orifices de sortie respectifs (19,35) desdites turbines (16,32).

4. Le moteur à propulseur liquide selon la revendication 3, **caractérisé en ce qu'**il comprend, pour chacune desdites chambres de combustion (5), un circuit respectif (8) pour chauffer ledit liquide combustible, chaque circuit chauffant (8) ayant un orifice de sortie respectif (11) séparé et indépendant de l'orifice de sortie (11) de l'autre circuit chauffant (8), lesdits orifices de sortie (11) étant connectés de manière fluidique en parallèle à un orifice d'entrée (18) de la turbine (16) dudit ensemble d'alimentation en liquide combustible (3).

5. Le moteur à propulseur liquide selon la revendication 4, **caractérisé en ce que** lesdits circuits chauffants (8) comprennent un orifice d'entré respectif (10) pour le liquide combustible à chauffer, lesdits orifices d'entrée (10) étant connectés de manière fluidique en parallèle à une sortie (15) de la pompe (12) de l'ensemble d'alimentation en liquide combustible (3).
